# EUROPEAN PATENT APPLICATION

(11) **EP 4 755 532 A1**
(43) Date of publication of application: **10.06.2026**
(21) Application number: 25216685.5
(22) Date of filing: 18.11.2025
(51) Int. Cl.: B08B 3/02, B60B 19/00

(54) **SURFACE CLEANING DEVICE**

(30) Priority: 05.12.2024 US 202418969415
(71) Applicant: Greenworks (Jiangsu) Co., Ltd, Changzhou, Jiangsu 213023 (CN)
(72) Inventor: SUCHOZA, Nicholas, Moresville, NC (US)
(74) Representative: Bergenstråhle & Partners AB

(57) **Abstract**

A surface cleaning device (10; 100) is disclosed. The surface cleaning device (10; 100) includes a housing (12; 112); a spray bar assembly (16; 116) connected to the housing (12; 112), the spray bar assembly (16; 116) spraying a ground surface (G) to be cleaned with a high pressure liquid; and a plurality of wheels (18; 118) connected to the housing (12; 112), each of the wheels (18; 118) having a hub (40; 140) and a plurality of rollers (42; 142) to move the surface cleaning device (10; 100) in multiple directions.

## Description

### BACKGROUND OF THE INVENTION

This invention relates generally to a surface cleaning device, and more particularly to a pressure washer surface cleaning device.

Various types of surface cleaning devices are known. The use of surface cleaning devices has become widespread in various fields, particularly in stations, docks, airports, workshops, warehouses, schools, hospitals, restaurants, stores and the like where a large amount of surface area is to be cleaned.

In particular, surface cleaning devices have been rapidly developed in the field of cleaning, and the cleaning principle thereof is to form a high-speed water flow after pressurizing the water, thereby removing dirt covering a floor or surface. The cleaning method has the advantages that when the surface is cleaned, the surface is not damaged. The surface can be cleaned completely by the high-speed water flow, and the cleaning efficiency is very high.

One of the problems associated with current high pressure surface cleaning devices is that the surface cleaning devices either ride along the surface on brushes disposed on a bottom of the surface cleaning device or use caster wheels to allow easier movement along the surface. The brushes do not permit easy movement as the brushes can have friction against rough surfaces. The caster wheels allow easier movement, but are large, add weight, and extend the footprint of the surface cleaning device, making it hard to use the surface cleaning device in tight spots.

### BRIEF SUMMARY OF THE INVENTION

This need is addressed by a surface cleaning device that provides a small footprint for tight spaces, maintains the housing of the surface cleaning device a predetermined distance off the ground, and provides the user with a surface cleaning device that is easy to move along the surface.

According to one aspect of the invention, a surface cleaning device includes a housing; a spray bar assembly connected to the housing, the spray bar assembly spraying a ground surface to be cleaned with a high pressure liquid; and a plurality of wheels connected to the housing, each of the wheels having a hub and a plurality of rollers to move the surface cleaning device in multiple directions.

According to another aspect of the invention, a surface cleaning device includes a housing defining an open cavity therein; a spray bar assembly connected to the housing and disposed in the cavity, the spray bar assembly spraying a ground surface to be cleaned with a high pressure liquid; and a plurality of wheels connected to the housing, each of the wheels having a hub and a plurality of rollers disposed around a perimeter of the hub to move the surface cleaning device in multiple directions.

### BRIEF DESCRIPTION OF THE DRAWINGS

The invention may be best understood by reference to the following description taken in conjunction with the accompanying drawing figures in which:
FIG. 1 is a top perspective view of a surface cleaning device;
FIG. 2 is a bottom perspective view of the surface cleaning device of FIG. 1;
FIG. 3 is a top view of the surface cleaning device of FIG. 1;
FIG. 4 is an exploded view of a wheel of the surface cleaning device of FIG. 1;
FIG. 5 is a top perspective view of a surface cleaning device;
FIG. 6 is a bottom view of the surface cleaning device of FIG. 5; and
FIG. 7 is an exploded view of a wheel of the surface cleaning device of FIG. 5.

### DETAILED DESCRIPTION

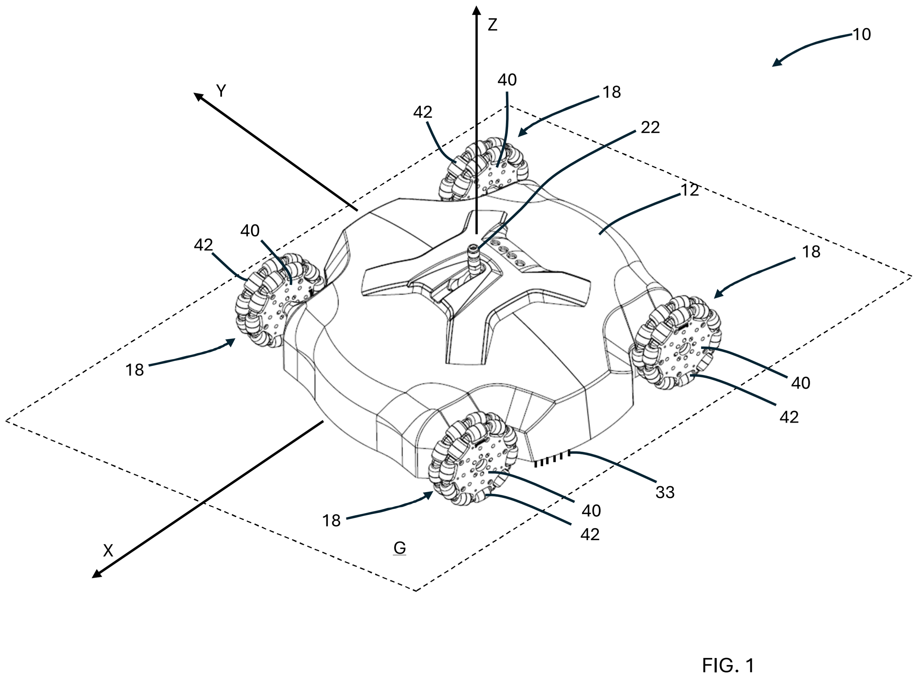

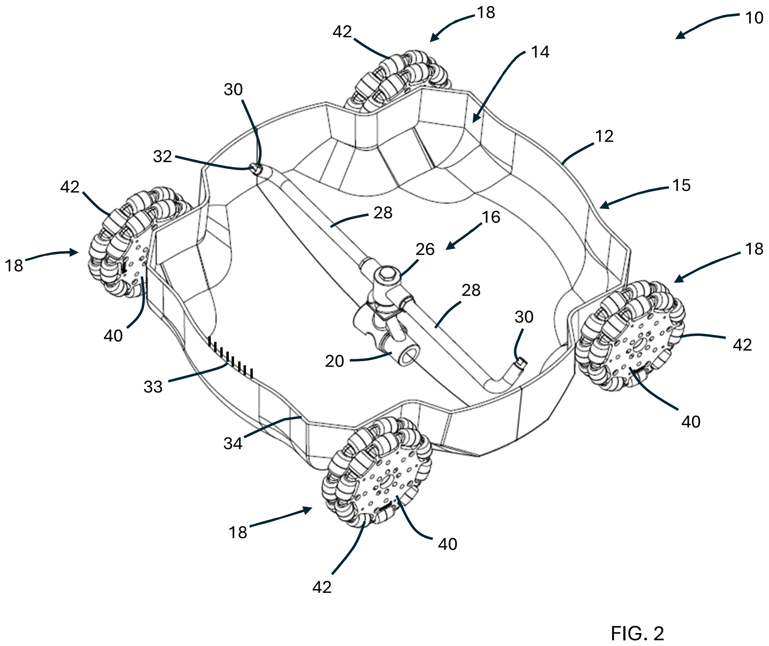

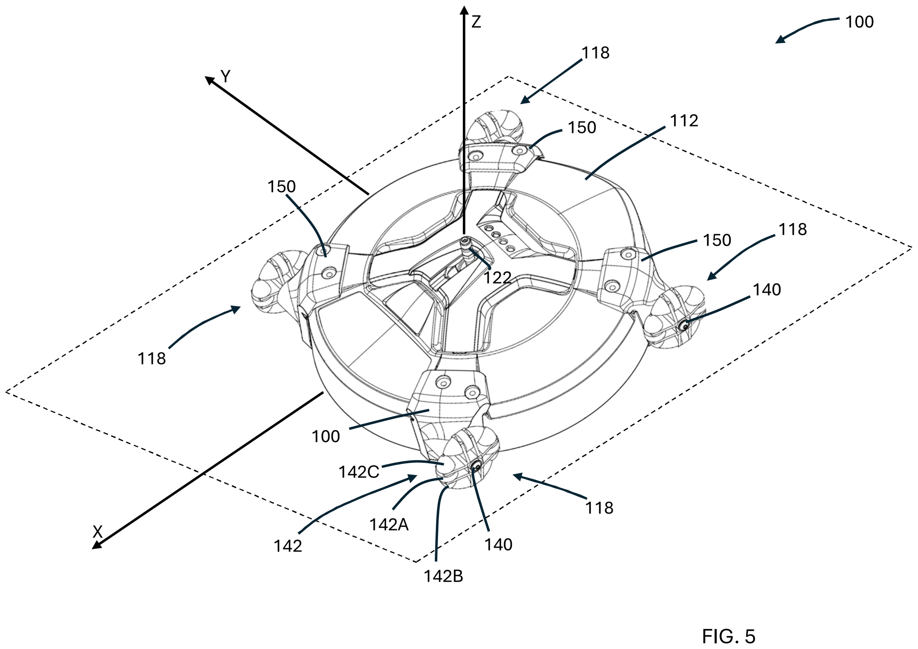

Referring to the drawings wherein identical reference numerals denote the same elements throughout the various views, FIGS. 1-4 show a representative embodiment of a surface cleaning device 10. The surface cleaning device 10 includes a housing 12 having an open cavity 14, a spray bar assembly 16 connected to the housing 12 and positioned in the cavity 14, and a plurality of wheels 18 to permit movement of the surface cleaning device 10. As illustrated, the housing 12 has a rectangular shape and a respective one of the plurality of wheels 18 is positioned at a respective corner of the housing 12. It should be appreciated that the housing 12 may be any suitable shape, for example, circular (see housing 112, FIG. 5). As shown, the cavity 14 is defined by the housing 12 and an open bottom 15 of the housing 12 to permit the spray bar assembly 16 to clean a ground surface "G" as it is traversed by the surface cleaning device 10.

It is noted that, as used herein, the terms "axial" and "longitudinal" both refer to a direction parallel to the axis X, while "vertical" refers to a direction perpendicular to the axial direction and to the ground surface G (see arrow "Z" in FIG. 1) and "lateral" refers to a direction mutually perpendicular to the axial and vertical directions (see arrow "Y" in FIG. 1). These directional terms are used merely for convenience in description and do not require a particular orientation of the structures described thereby.

The spray bar assembly 16 includes a water inlet 20 connected to a pressure hose connector 22. It should be appreciated that the connector 22 is not limited to a specific type of connector and may include any suitable connector for connecting to a pressurized water source. The pressure hose connector 22 is pivotally connected to the water inlet 20 and extends through the housing 12 to a top 24 of the housing 12 to permit a user to access the connector 22.

Opposite the pressure hose connector 22, a rotatable hub 26 is connected to the water inlet 20. A spray bar 28 is connected to the rotatable hub 26 such that when pressurized water enters the water inlet 20, the pressure from the water causes the rotatable hub 26 to rotate, thereby causing the spray bar 28 to rotate. As illustrated, two spray bars 28 are connected to the rotatable hub 26, each of the spray bars 28 including a nozzle 30 to provide a restriction orifice 32 to enhance cleaning. It should be appreciated that any suitable number of spray bars may be used.

As discussed above, a plurality of wheels 18 are connected to the housing 12 to support the housing 12 a predetermined distance above the ground surface G and allow the surface cleaning device 10 to traverse the ground surface G or an area to be cleaned. More particularly, the housing 12 is positioned above the ground surface G to allow brushes 33 positioned around a bottom perimeter 34 of the housing 12 to be slightly off the ground surface G or slightly touching the ground surface G. While not shown, a height adjustment mechanism may be provided to move the housing 12 relative to the wheels 18 to raise and lower the housing 12 a preselected distance above the ground surface G, for example, 0.3175cm (0.125in) increments. Proper placement of the housing above the ground surface G allows the surface cleaning device to glide or move easily across the ground surface G.

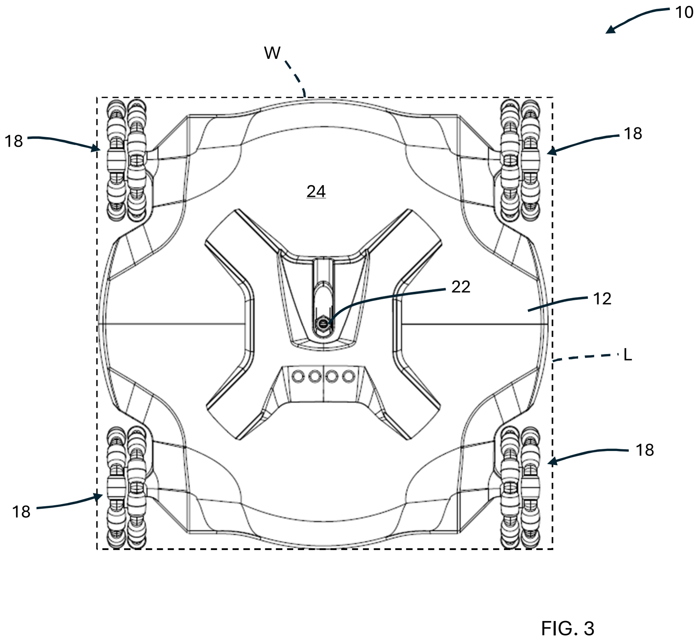

As shown in FIG. 3, unlike a surface cleaning device with caster wheels, the position of the wheels 18 at each corner of the housing 12 allows the wheels to be placed inside of a width "W" and length "L" of the surface cleaning device 10. This allows for a smaller footprint and smaller packaging, but also helps the user to clean tight spaces that otherwise could not be cleaned with a surface cleaning device with caster wheels.

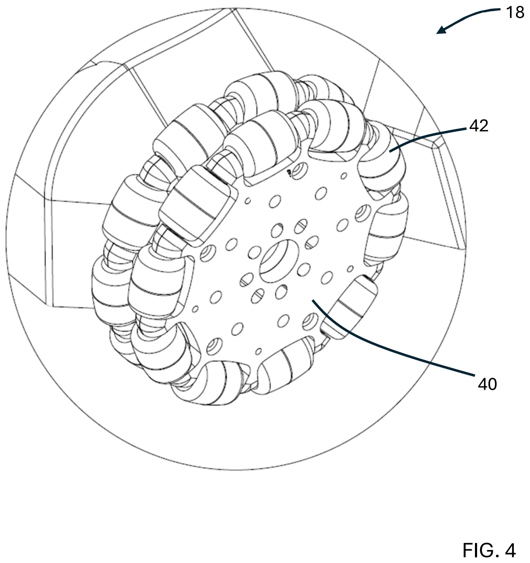

As illustrated in FIG. 4, the wheels 18 are omni-directional wheels. The wheels 18 include a hub 40 and a plurality of discs or rollers 42 disposed around a perimeter 44 of the hub 40. This permits the wheels 18 to move in the X, Y and rotational directions. As shown, each of the wheels 18 are formed by two individual hubs with rollers connected together. This configuration allows for more rollers 42 in a smaller package. The two wheel configuration allows the wheel 18 to roll more smoothly, especially over rough terrain that is not perfectly level.

Each of the wheels 18 may have a diameter of between about 50mm to 150mm, depending on the desired use and packaging. Additionally, each of the wheels may have wheel diameter to roller quantity ratio of about 9:1 to about 25:1 (more particularly about 9.6:1 to about 20:1), and a wheel diameter to roller diameter ratio of about 3:1 to about 7:1 (more particularly about 3.5:1 to about 6.6:1).

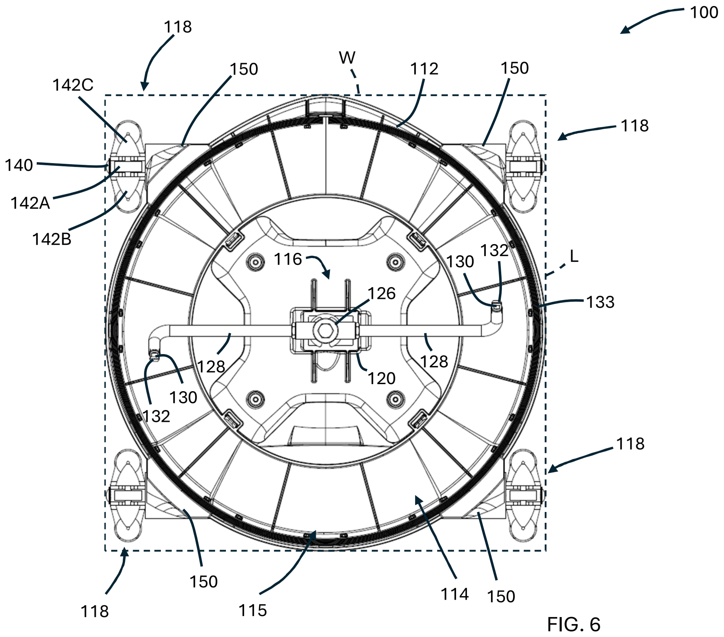

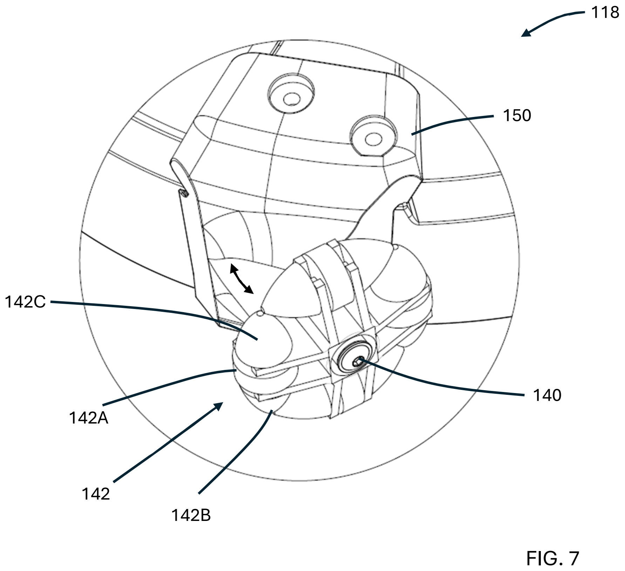

Referring to FIGS. 5-7, a surface cleaning device 100 is shown. Like surface cleaning device 10, surface cleaning device 100 includes a housing 112, a cavity 114 defined by the housing and an open bottom 115, a spray bar assembly 116, and wheels 118. The spray bar assembly 116 includes a water inlet 120, a connector 122, rotatable hub 126, spray bars 128, and nozzles 130.

Unlike the surface cleaning device 10, the housing 112 of the surface cleaning device 100 has a circular shape and the wheels 118 are mounted to the housing 112 using brackets 150. The brackets 150 are angled to allow the wheels 118 to be positioned in the same direction (i.e., in the X direction like that of surface cleaning device 10). Alternatively, the wheels 118 may be mounted directly to the housing 112 in a triangular pattern.

Each of the wheels 118 include a hub 140 and a plurality of discs or rollers 142. As shown, each of the rollers 142 are a three-piece roller having a center roller 142A, a first conical roller 142B positioned on a first side of the center roller 142A, and a second conical roller 142C positioned on a second side of the center roller 142A. The wheels 118 allow the surface cleaning device to move in the X, Y, and rotational directions. Additionally, the brackets 150 may be pivotable to allow the wheels 118 to move in and out relative to the housing 112.

In use, when the surface cleaning devices 10, 100 are connected to a high-pressure water source, high pressure water flows through the connector 22, 122 to the water inlet 20, 120 and into the rotatable hub 26, 126. The high-pressure water then enters the spray bars 28, 128 and is sprayed and released by the spray nozzles 30, 130. The nozzles 30, 130 may be configured as a fan-shaped spray having a corresponding angle with the ground surface G or any other suitable spray. As the high-pressure water is sprayed, the nozzles 30, 130 are subjected to a jet reaction force to drive the rotatable hub 26, 126 to rotate the spray bar assembly 16, 116 at a high speed, thereby realizing a high cleaning function.

The foregoing has described a surface cleaning device. All of the features disclosed in this specification, and/or all of the steps of any method or process so disclosed, may be combined in any combination, except combinations where at least some of such features and/or steps are mutually exclusive. Each feature disclosed in this specification may be replaced by alternative features serving the same, equivalent or similar purpose, unless expressly stated otherwise. Thus, the present invention is only limited by the appended claims.

## Claims

1. A surface cleaning device (10; 100), comprising:
a housing (12; 112);
a spray bar assembly connected to the housing (12; 112), the spray bar assembly (16; 116) spraying a ground surface (G) to be cleaned with a high pressure liquid; and
a plurality of wheels (18; 118) connected to the housing (12; 112), each of the wheels (18; 118) having a hub (40; 140) and a plurality of rollers (42; 142) to move the surface cleaning device (10; 100) in multiple directions.

2. The surface cleaning device (10; 100) of claim 1, wherein the spray bar assembly (16; 116) is positioned in a cavity (14; 114) defined by the housing (12; 112).

3. The surface cleaning device (10; 100) of claim 1, wherein each of the plurality of wheels (18; 118) has a diameter of about 50mm to about 150mm.

4. The surface cleaning device (10; 100) of claim 1, wherein each of the plurality of wheels (18; 118) has a wheel diameter to roller quantity ration of about 9:1 to about 25:1.

5. The surface cleaning device (10; 100) of claim 1, wherein each of the plurality of wheels (18; 118) has a wheel diameter to roller diameter ratio of about 3:1 to about 7:1.

6. The surface cleaning device (10; 100) of claim 1, wherein the each of the plurality of rollers (142) includes a center roller (142A), a first roller (142B) positioned on a first side of the center roller (142A), and a second roller (142C) positioned on a second side of the center roller (142A).

7. A surface cleaning device (10; 100) according to claim 1, wherein the housing (12; 112) defines an open cavity (14; 114) therein;
the spray bar assembly (16; 116) is disposed in the cavity (14; 114), and wherein
the plurality of rollers (42; 142) is disposed around a perimeter of the hub (40; 140).

8. The surface cleaning device (10; 100) of claim 1 or 7, wherein each of the plurality of wheels (18; 118) is positioned within a width and length of the surface cleaning device (10; 100).

9. The surface cleaning device (10; 100) of claim 1 or 7, wherein each of the plurality of wheels (18; 118) is comprised of two hubs (40; 140) connected together, each of the hubs (40; 140) having a plurality of rollers (42; 142) disposed around a perimeter of the hubs (40; 140).

10. The surface cleaning device (10; 100) of claim 9, wherein the each of the plurality of rollers includes a center roller (142A), a first roller positioned (142B) on a first side of the center roller (142A), and a second roller (142C) positioned on a second side of the center roller (142A).

11. The surface cleaning device (10; 100) of claim 10, wherein the first (142B) and second (142C) rollers have a conical shape.

12. The surface cleaning device (10; 100) of claim 7, wherein the spray bar assembly (16; 116) includes:
a connector (22; 122) extending through the housing (12; 112) to a top (24) of the housing (12; 112) to connect to a pressurized water source;
a water inlet (20; 120) connected to the connector (22; 122);
a rotatable hub (26; 126) connected to the water inlet (20; 120); and
at least one spray bar (28; 128) connected to the rotatable hub (26; 126), the at least one spray bar (28; 128) rotating in the cavity (14; 114) when pressurized water is applied to the surface cleaning device (10; 100).

13. The surface cleaning device (10; 100) of claim 12, wherein each of the plurality of wheels (18; 118) is connected to the housing (12; 112) by a bracket (150).

14. The surface cleaning device (10; 100) of claim 13, wherein the bracket (150) pivots to allow each of the plurality of wheels (18; 118) to move in and out relative to the housing (12; 112).
